# EUROPÄISCHE PATENTANMELDUNG

(11) **EP 0 825 378 A2**
(43) Veröffentlichungstag der Anmeldung: **25.02.1998**
(21) Anmeldenummer: 97111013.5
(22) Anmeldetag: 02.07.1997
(51) Int. Cl.: F16L 51/02, F16L 27/11

(54) **Einrichtung zum Ausgleich der Bewegung zweier miteinander druckdicht zu verbindender Rohre und Verfahren zu ihrer Herstellung**

(30) Priorität: 17.08.1996 DE 19633158
(71) Anmelder: STENFLEX Rudolf Stender GmbH, 22851 Norderstedt (DE)
(72) Erfinder: Stender, Birgit, Dipl.-Kffr, 22391 Hamburg (DE); Bruchhold, Ingo, Dr.-Ing., 10585 Berlin (DE)
(74) Vertreter: Niedmers, Ole, Dipl.-Phys.

(57) **Zusammenfassung**

Es wird eine Einrichtung (Kompensator) (10) zum Ausgleich der Bewegung zweier miteinander druckdicht zu verbindender Rohre vorgeschlagen, umfassend einen rohrförmig und wenigstens einlagig (13) ausgebildeten Balgkörper (12), durch den ein durch die Rohre gefördertes Medium (19) hindurchfließt und der an seinen beiden Öffnungsseiten (14, 15) mit einem Element (16, 17) zum Anschluß an das jeweilige Rohr versehen ist, sowie ein Verfahren zur Herstellung einer derartigen Einrichtung (10). Dabei wird die den Balgkörper (12) bildende Lage (13) wenigstens an der in den Innenraum (18) gerichteten und vom Medium (19) beaufschlagten Seite (130) mit einer Beschichtung (25) versehen. Die Beschichtung wird dabei zunächst auf einem Trägerelement (11), das entweder flächig oder rohrförmig ist, aufgebracht und nachfolgend in rohrförmiger Form zum eigentlichen Balgkörper 12 verformt.

## Beschreibung

Die Erfindung betrifft eine Einrichtung (Kompensator) zum Ausgleich der Bewegung zweier miteinander druckdicht zu verbindender Rohre, umfassend einen rohrförmig und wenigstens einlagig ausgebildeten Balgkörper, durch den ein durch die Rohre gefördertes Medium hindurchfließt und der an seinen beiden Öffnungsseiten mit einem Element zum Anschluß an das jeweilige Rohr versehen ist, sowie ein Verfahren zur Herstellung der Einrichtung.

Derartige Einrichtungen, die auch Kompensatoren genannt werden, werden in Rohrleitungssystemen von Industrieanlagen, im Schiffbau, in Kraftwerken, aber auch in der Haustechnik als zuverlässige flexible Rohrverbindungen verwendet. Sie sind faktisch Bewegungsausgleicher in Rohrleitungen, an Pumpen, Motoren, Turbinen, Maschinen, Apparaten und Behältern und können zugleich auch als Ausgleichsstücke für Montageungenauigkeiten, als Anbaustücke an Armaturen oder als Wandabdichtungen an Rohrdurchführungen verwendet werden.

Bei einem speziellen Typ von Einrichtungen dieser Art, im folgenden kurz Kompensatoren genannt, besteht der Balgkörper aus einem schraubengangförmig oder ziehharmonikaartig gefalteten bzw. ringgewellten metallischen Balg, wobei derartige Kompensatoren kurz Metallbalgkompensatoren genannt werden.

Derartige Kompensatoren werden letztlich in Anlagen bzw. Leitungen eingesetzt, die alle möglichen flüssigen und gasförmigen Medien fördern bzw. leiten. Derartige Medien können beispielsweise auch hochkonzentrierte Säuren sein oder auch Laugen, wobei zu diesem Zweck alle Teile des Kompensators, die mit derartigen hochaggressiven Medien in Berührung kommen, aus gegen diese Medien resistenten Werkstoffen ausgebildet sind. So sind beispielsweise dafür der Balgkörper aus Edelstahl ausgebildet ebenso wie die zum Kompensator gehörenden flansch- oder rohrförmigen Anschlußelemente. Es sind auch Kompensatoren dieser Art bekannt, bei denen alle medienberührenden Teile aus hochwertigen Kunststoffen wie Polytetrafluorethylen PTFE bestehen. Die Kompensatoren der eingangs genannten Art werden aber auch beispielsweise im medizinischen Bereich oder im Lebensmittelbereich eingesetzt, wobei auch für diese Einsatzbereiche in bezug auf die Kompensatoren sichergestellt sein muß, daß die in den Kompensatoren geförderten Medien nicht durch Korrosionsprodukte verunreinigt werden oder aber zwischen Medium und dem Werkstoff des Kompensators chemische Verbindungen aufgebaut werden, die nekrotisch wirken, beispielsweise bei medizinischer Anwendung des Kompensators, oder aber einen negativen Einfluß auf das Medium ausüben, beispielsweise bei einem Einsatz des Kompensators im Lebensmittelbereich.

Es ist zwar möglich, derartige Kompensatoren, wie vorangehend aufgezeigt, aus geeigneten Edelstählen bzw. hochwertigen Kunststoffen herzustellen, die diese negativen Eigenschaften, wie sie ebenfalls vorangehend beschrieben worden sind, nicht aufweisen, Edelstähle und Kunststoffe sind jedoch auch für derartige Anwendungen nur unter Aufbringung sehr hoher Kosten bereitstellbar, wobei sowohl für Edelstähle als auch für Kunststoffe gilt, daß diese um so schwerer zu bearbeiten sind, je höher ihre Güte bzw. ihre Verträglichkeit mit aggressiven oder auch in hoher Reinheit zu fördernden Medien ist. Hinzu kommt noch, daß Kunststoffe auch noch geringere Festigkeitseigenschaften als metallische Werkstoffe aufweisen, so daß für viele Zwecke, wo eine hohe radiale und axiale Bewegung des Kompensators bei seinem Einsatz zu erwarten ist, Kunststoff überhaupt nicht anwendbar ist, so daß auf hochwertige Stähle ausgewichen werden muß, was aus den voraufgezeigten Gründen werkstoff- und fertigungsbedingt mit sehr hohen Kosten verbunden ist.

Es ist deshalb Aufgabe der vorliegenden Erfindung, eine Einrichtung der eingangs genannten Art sowie ein Verfahren zu ihrer Herstellung zu schaffen, die es erlauben, an sich auch sehr kostengünstige Werkstoffe auch bei hochreaktiven Medien, die mittels des Kompensators gefördert werden sollen, zu verwenden, wobei das Verfahren zur Herstellung derartiger Einrichtungen weitgehend unter Verwendung bisheriger bekannter Verfahrensschritte zur Herstellung derartiger Einrichtungen ausgeführt werden können soll, und wobei derartige Einrichtungen zudem auch kostengünstig bereitstellbar sein sollen und das Verfahren kostengünstig durchführbar sein soll.

Gelöst wird die Aufgabe gemäß der erfindungsgemäßen Einrichtung dadurch, daß die den Balgkörper bildende Lage wenigstens an der in den Innenraum gerichteten und vom Medium beaufschlagten Seite mit einer Beschichtung versehen ist.

Der Vorteil der erfindungsgemäßen Einrichtung besteht im wesentlichen darin, daß das den Balgkörper im wesentlichen bildende drucktragende Teil, nämlich das rohrförmig ausgebildete Trägerelement, wie bisher aus hochfestem, preiswertem Werkstoff hergestellt werden kann, wohingegen die Beschichtung aus einem Werkstoff bestehen kann, der unmittelbar auf das im Balgkörper bzw. im Kompensator insgesamt geförderte Medium abgestimmt werden kann, wobei aufgrund des den Innendruck aufnehmenden rohrförmigen Trägerelements aus hochfestem, preiswertem Werkstoff die Beschichtung selbst nur in einer Dicke realisiert zu sein braucht, daß sie den im Kompensator geförderten Medien chemisch standhält bzw. keinen Einfluß auf das Medium ausübt, an der Druckaufnahme im Balgkörper somit nicht teilzunehmen braucht.

Gemäß einer vorteilhaften Ausgestaltung der Einrichtung besteht die Beschichtung aus einem metallischen Werkstoff, vorzugsweise Chrom oder Nickel. Es sind aber auch beliebige andere geeignete metallische Werkstoffe möglich, die geeignet sind, als Beschichtung des Balgkörpers zu dienen, wenn sie nur eine ausreichende Elastizität aufweisen, um beschädigungslos der bestimmungsgemäßen Bewegung des Balgkörpers in axialer und radialer Richtung bei seinem bestimmungsgemäßen Einsatz zu folgen.

Als Beschichtung des Trägerelements, das nach seiner bestimmungsgemäßen endgültigen Ausformung den Balgkörper bildet, eignet sich neben metallischen Beschichtungswerkstoffen auch Kunststoff, der ebenfalls unmittelbar an das im Balgkörper zu fördernde Medium in bezug auf seine Reaktionsresistenz angepaßt werden kann.

In Abhängigkeit des zu fördernden Mediums können viele geeignete Kunststoffwerkstoffe verwendet werden, die genau an das Medium angepaßt werden können. Als besonders vorteilhaft hat es sich erwiesen, als Beschichtungswerkstoff Kunststoff in Form von Polytetrafluorethylen PTFE zu verwenden, das gegen sehr viele Medien eine hohe chemische Resistenz aufweist und auch im medizinischen Sektor und im Lebensmittelsektor als geeigneter und in bezug auf die im Balgkörper geförderten Medien unbedenklicher Werkstoff an sich bekannt ist.

Eine Beschichtung in Form von Kunststoff eignet sich im übrigen auch zur Ausbildung einer zusätzlich isolierenden Schicht, so daß neben der Medienbeständigkeit automatisch eine Wärmetransportbarriere auf sehr einfache Weise ohne zusätzliche Maßnahmen geschaffen werden kann.

Die Lösung der Aufgabe gemäß dem erfindungsgemäßen Verfahren besteht darin, daß zunächst auf einem den späteren Balgkörper bildenden Trägerelement eine Beschichtung aufgebracht wird, wobei nachfolgend das mit der Beschichtung versehene Trägerelement zum Balgkörper verformt wird.

Es ist beispielsweise möglich, zunächst das den späteren Balgkörper bildende Trägerelement beispielsweise in Form einer rechteckigen ein- oder mehrlagigen Platte auszubilden und diese dann nachfolgend zu beschichten und dann nachfolgend zu einem geschlossenen Rohr zu verformen, das dann wiederum in die bestimmungsgemäße Form des Balgkörpers gebracht wird. Auf diese Weise werden, wie angestrebt, vorteilhafterweise die Verfahrensschritte verwendet, wie sie beispielsweise bei herkömmlichen Metallbalgkompensatoren Anwendung finden. Es sei aber darauf hingewiesen, daß die äußere Lage, die den Balgkörper bildet, auf dem innen die erfindungsgemäße Beschichtung aufgebracht wird, nicht notwendig eine metallische Schicht sein muß. Es sind grundsätzlich dafür an sich auch Kunststoffschichten oder Verbundwerkstoffschichten denkbar, soweit sie nur imstande sind, den Innendrücken im Kompensator, die von dem Medium im Kompensator ausgeübt werden, standzuhalten, d.h. in der Lage sind, das drucktragende Element des Balgkörpers zu bilden.

Bei einer vorteilhaften Ausgestaltung des Verfahrens wird das Trägerelement zunächst in Form eines Rohres ausgebildet und nachfolgend beschichtet, wobei bei dieser Ausgestaltung des Verfahrens kein gesondertes Augenmerk auf einen gegebenenfalls vorhandenen Nahtbereich des Trägerelements gerichtet werden muß, um sicherzustellen, daß auch dort eine durchgehende Beschichtung vorhanden ist und das Medium nicht mit dem drucktragenden Element bzw. der drucktragenden Lage des Balgkörpers später in Berührung kommt. Derartige Maßnahmen sind beispielsweise bei zu beschichtenden flächigen Trägerelementen, die nach der Beschichtung erst zu einem Rohr verformt werden, zu beachten.

An sich sind mit dem Verfahren beliebig geeignete Balgkörper ausbildbar, das Verfahren eignet sich jedoch vorteilhafterweise auch zur Ausformung eines faltenbalgartigen Balgkörpers, beispielsweise in Form des eingangs erwähnten Metallbalgkompensators, der ziehharmonikaartig geformte Falten oder ringwellartig geformte Faltungen aufweist.

Um zu verhindern, daß während der Ausbildung der bestimmungsgemäßen Form des Balgkörpers während des Herstellungsverfahrens eine Beschädigung der an sich zur Aufnahme der Druck- und Zugkräfte nicht geeigneten Beschichtung erfolgt, wird die Verformungsenergie bei dem Verformungsvorgang mittels Druck in das beschichtete und rohrförmig ausgebildete Trägerelement von dessen Innenraum her eingeleitet, und zwar vorzugsweise mittels hydraulischem und/oder pneumatischem Druck. Es erfolgt somit keine Beschädigung der Beschichtung, da die Verformung ohne mechanische Berührung der Beschichtung bzw. der Beschichtungsfläche vollzogen wird.

Alternativ oder auch zusätzlich kann es vorteilhaft sein, daß dabei die Verformungsenergie mittels Druck in das beschichtete und rohrförmig ausgebildete Trägerelement von außen in dieses eingeleitet wird, wobei es für bestimmte Anwendungsfälle bzw. Ausgestaltungen des Verfahrens insbesondere in Abhängigkeit der Werkstoffe, die für die die Druckkräfte aufnehmende Lage des Balgkörpers bestimmend sind, auch möglich ist, den für die Verformung des Balgkörpers in seine bestimmungsgemäße Form aufzubringenden Druck mittels mechanischen Drucks von außerhalb des Balgkörpers, d.h. auf die den Mediumdruck aufnehmende Lage auszuüben.

Auf diese Weise können vorteilhaft Verformungseinrichtungen verwendet werden, wie sie bei bisherigen Herstellungsschritten zur Ausbildung beispielsweise von Metallbalgkompensatoren verwendet worden sind, d.h. es sind keine aufwendigen neuen Fertigungsvorrichtungen nötig, um die erfindungsgemäßen Kompensatoren herzustellen, da auf bisher verwendete Vorrichtungen zurückgegriffen werden kann und somit auch hierdurch das Ziel erreicht wird, das Fertigungsverfahren für die Balgkörper kostengünstig betreiben zu können.

Dabei ist es ebenfalls vorteilhaft, bei der Herstellung der Kompensatoren das Verfahren derart anzuwenden, daß der Druck in Radialrichtung und/oder Axialrichtung von ringförmig ausgebildeten Formelementen ausgeübt wird, wie sie beispielweise standardmäßig für die Herstellung bisheriger Metallbalgkompensatoren Verwendung finden.

Dieses gilt gleichermaßen auch für das Verfahren unter Anwendung der bekannten Vorrichtung, bei dem der Druck vorzugsweise in Axialrichtung durch axiale Verschiebung der ringförmig ausgebildeten Formelemente in das Trägerelement eingeleitet wird. Sowohl bei der Formgebung in radialer als auch in axialer Richtung findet keine Berührung der gegebenenfalls mechanisch sehr empfindlichen Beschichtung auf der Innenseite des rohrförmigen Trägerelements, das zum endgültigen Balgkörper geformt wird, statt.

Die Verbindung des verfahrensgemäß endgültig ausgeformten Balgkörpers mit den Anschlußelementen, die beispielsweise flanschförmige oder rohrförmige Anschlußelemente sein können, erfolgt vorzugsweise dadurch, daß der Balgkörper nach seiner bestimmungsgemäßen Ausformung mittels einer Bördelverbindung mit dem Anschlußelement bzw. den Anschlußelementen verbunden wird, so daß die gegebenenfalls mechanisch und thermisch hochempfindliche Beschichtung nicht mittels einer Schweißverbindung wiederum zumindest partiell im Bereich der Ausbildung der Verbindung zerstört wird und wiederum neu beschichtet werden muß.

Sind beispielsweise die Anschlußelemente in Form von Flanschen ausgebildet, kann zudem vorteilhafterweise die Beschichtung des Dichtelements im Bereich zwischen Balgkörper und Anschlußelement als Dichtelement wirken, so daß keine gesonderten Maßnahmen ergriffen werden müssen, um zusätzliche Dichtelemente in diesen Bereich zum Anschluß an das mit dem Kompensator zu verbindende Rohr vorsehen zu müssen.

Die Beschichtung selbst kann vorteilhafterweise mittels beliebiger geeigneter Auftragverfahren ausgebildet werden, beispielsweise mittels chemischer Verfahren, mittels elektrolytischer Verfahren oder auch mittels Spritz-/Schweißverfahren, wobei alle diese Verfahren sich vorteilhafterweise auch dazu eignen, insbesondere auf das im Kompensator geförderte Medium abgestimmt werden zu können.

Die Erfindung wird nun unter Bezugnahme auf die nachfolgenden schematischen Zeichnungen anhand eines Ausführungsbeispieles eingehend beschrieben. Darin zeigen:
- Fig. 1: im Schnitt ein rohrförmig gestaltetes Trägerelement, das den späteren Balgkörper des Kompensators bilden soll, in einlagiger Form ohne Ausbildung einer Beschichtung,
- Fig. 2: ein rohrförmiges Trägerelement, wie in Fig. 1 dargestellt, wobei jedoch die Innenseite der Lage mit einer Beschichtung versehen ist,
- Fig. 3: im Ausschnitt im Schnitt eine Vorrichtung, mit der das beschichtete rohrförmige Trägerelement in eine bestimmungsgemäß auszubildende Form des endgültigen Balgkörpers überführt wird, wobei schematisch die beim Verformungsvorgang aufzubringenden und einzuleitenden Kräfte dargestellt sind,
- Fig. 4: den endgültig ausgeformten Balgkörper im Schnitt vor der Verbindung mit den flanschförmigen, beiderseits der Öffnungen des Balgkörpers anzubringenden Anschlußelementen, und
- Fig. 5: den fertig hergestellten Kompensator, wobei die Anschlußelemente beidseitig der Öffnungen mittels einer Bördelverbindung mit dem Balgkörper verbunden sind.

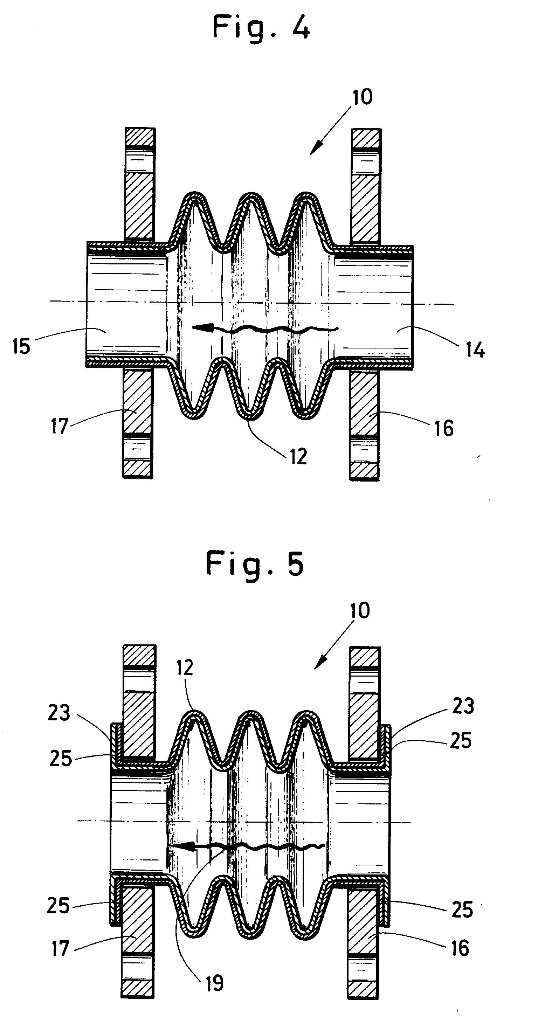

Die Erfindung bezieht sich auf eine Einrichtung 10, im folgenden kurz Kompensator genannt, wie er in komplett fertiggestellter Form beispielsweise in Fig. 5 dargestellt ist. Der Kompensator 10 dient zum Ausgleich der Bewegung zweier miteinander druckdicht verbundener Rohre, die hier im Zusammenwirken mit dem Kompensator 10 nicht dargestellt sind. Der Kompensator 10 umfaßt einen rohrförmig und hier mittels einer einzigen Lage 13 ausgebildeten Balgkörper 12. An den beiden Eingangsseiten bzw. Einsatzöffnungen 14, 15 des Balgkörpers 12 ist dieser mit jeweils einem Anschlußelement 16, 17 versehen, wobei das Anschlußelement in den Figuren 4 und 5 mit üblichen Verbindungsflanschen versehen ist. Flanschartig ausgestaltete Anschlußelemente 16, 17 sind bei derartigen Kompensatoren 10 üblich, es können aber auch rohransatzförmige Anschlußelemente 16, 17 vorgesehen sein, die jeweils ein Außen- und ein Innengewinde zum Anschluß der jeweiligen Rohre oder nur Außengewinde oder nur Innengewinde aufweisen. Das durch den Kompensator 10 und die damit verbundenen Rohre geförderte Medium 19 kann gasförmig oder flüssig sein. Der vorangehend beschriebene grundsätzliche Aufbau derartiger Kompensatoren ist an sich dem Fachmann bekannt, so daß auf den allgemeinüblichen Aufbau nicht weiter eingegangen zu werden braucht.

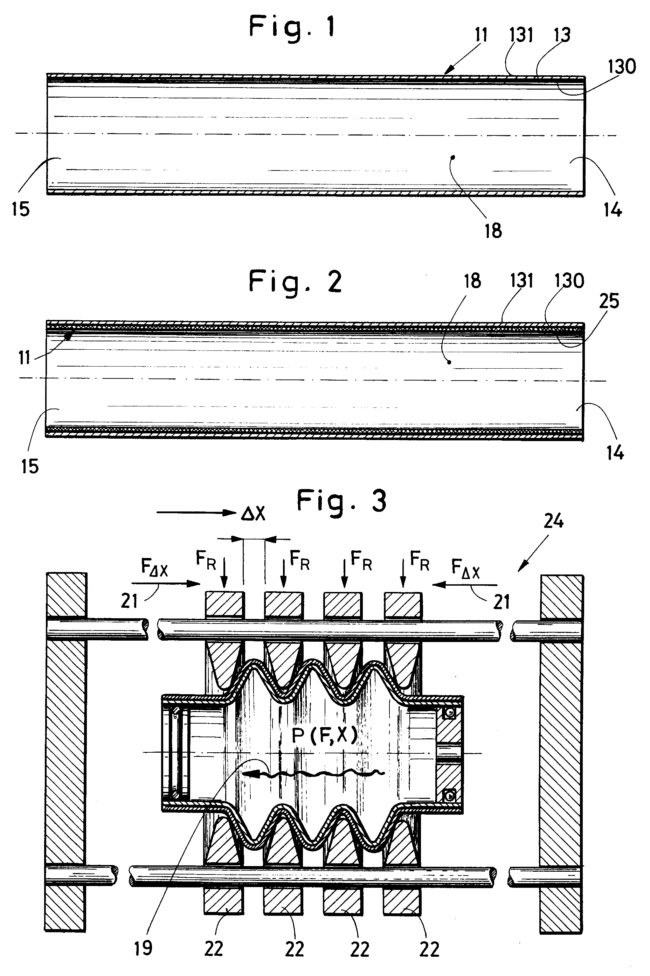

Beim erfindungsgemäß ausgestalteten Kompensator 10 wird beispielsweise von einem in Form eines Halbzeuges bereitstellbaren Rohr, vergleiche Fig. 1, ausgegangen. Dieses rohrförmige Trägerelement 11, das wenigstens einlagig ausgebildet sein kann, wird an seiner vom Medium 19, d.h. von seinem Innenraum 18 mit dem Medium 19 beaufschlagten Seite 130 mit einer Beschichtung 25 versehen, die beispielsweise eine metallische Beschichtung aus Chrom oder Nickel sein kann oder einem sonstigen anderen geeigneten Metall bestehen kann. Es ist aber auch möglich, die Beschichtung 25 aus Kunststoff auszubilden, wobei der Kunststoff beispielsweise Polytetrafluorethylen PTFE sein kann. Auf die Außenseite 131 des rohrförmigen Trägerelements 11 können noch weitere Lagen aufgebracht werden, wobei aber hier aus Vereinfachungsgründen lediglich von einem einlagigen Trägerelement 11 gesprochen wird.

Eine Vorrichtung 24 zum Herstellen der Kompensatoren 10 in Form von ringgewellten Metallbalgkompensatoren ist schematisch unter Weglassung hier nicht interessierender Teile in Fig. 3 dargestellt. Bevor das Trägerelement 11 gemäß Fig. 2 in die Herstellungsvorrichtung 24 eingebracht wird, wird auf dem den späteren Balgkörper 12 bildenden Trägerelement 11 eine Beschichtung 25 aufgebracht. Diese Beschichtung 25, die, wie erwähnt, eine metallische Beschichtung oder auch eine Kunststoffbeschichtung sein kann, wird mittels geeigneter chemischer Verfahren oder auch elektrolytischer Verfahren oder mittels eines Spritz-/Schweißverfahrens aufgebracht. Nachfolgend wird dann das Trägerelement 11 in die Herstellungsvorrichtung 24 verbracht und dort zum späteren Balgkörper 12 bestimmungsgemäß verformt.

Es gibt mehrere Methoden, um die für die Verformung nötige Verformungsenergie in das Trägerelement 11 zur Ausbildung des endgültigen Balgkörpers 12 einzuleiten. Die Verformungsenergie kann beispielsweise von innen mittels Druck in das beschichtete und rohrförmig ausgebildete Trägerelement 11, d.h. von dessen Innenraum 18 her, eingeleitet werden, wobei der Innendruck P und die axiale Verschiebung X bezüglich ihrer Größen zeitlich in einem bestimmten Verhältnis stehend gewählt werden. Es ist aber auch möglich, alternativ oder zusätzlich zu dem Innendruck für die Verformung, der beispielsweise ein hydraulischer oder pneumatischer Druck sein kann, auch von außen mittels Druck die Verformungsenergie in das beschichtete und rohrförmig ausgebildete Trägerelement 11 in dieses einzuleiten.

Gemäß der Darstellung von Fig. 3 wird bei der dort dargestellten Herstellungsvorrichtung 24 mittels ringförmig ausgebildeter Formelemente 22 der Druck bzw. die Kraft zur Ausbildung der ringgewellten Form in Radialrichtung 20 und in Axialrichtung 21 in das rohrförmig ausgebildete Trägerelement 11 eingeleitet. Dabei wird der Druck bzw. die Kraft in Axialrichtung 21 durch axiale Verschiebung der ringförmig ausgebildeten Formelemente 22 in das Trägerelement 11 eingeleitet. Es erfolgt somit eine axiale Verschiebung der ringförmig ausgebildeten Formelemente, die entsprechend der gewünschten Größe der einzelnen Falten auf vorbestimmte Weise gewählt werden kann.

Der mittels der Herstellungsvorrichtung 24 dann endgültige hergestellte Balgkörper 12 ist in den Fig. 4 und 5 dargestellt. Der in Fig. 4 dargestellte Balgkörper 12 ist mit den flanschförmig ausgebildeten Anschlußelementen 16, 17 noch nicht verbunden. Mittels eines weiteren Verfahrensschrittes wird der Balgkörper 12 im Bereich seiner Öffnungen 14, 15 mittels einer jeweiligen Bördelverbindung 23 jeweils mit einem Anschlußelement 16, 17 verbunden, wobei die Beschichtung 25 dann, nachdem die Bördelverbindung 23 ausgeführt ist, im wesentlichen parallel zu den flanschförmig ausgebildeten Anschlußelementen 16, 17 liegt. Die Beschichtung 25 kann somit auch die Funktion eines Dichtelements im Bereich zwischen Balgkörper 12 und den Anschlußelementen 16, 17 einnehmen.

Mit dem somit verfahrensgemäß endgültig hergestellten Kompensator 10 wird ein Kompensator 10 bereitgestellt, der im Vergleich zu den im Stand der Technik bekannten Kompensatoren dieser Art sehr viel einfacher und kostengünstiger hergestellt werden kann, d.h. kostengünstiger bereitstellbar ist, und der zudem eine wesentlich höhere Belastbarkeit im Vergleich zu im Stand der Technik bekannten Kompensatoren aus Kunststoff aufweist, d.h. Kompensatoren, deren wesentliche Teile, d.h. die Anschlußelemente und der Balgkörper, insgesamt aus Kunststoff bestehen. Im vorliegenden Fall kann bei dem erfindungsgemäßen Kompensator 10 als druckaufnehmende Lage 13 oder können als druckaufnehmende Lagen (nicht dargestellt) kostengünstig verfügbarer metallischer Werkstoff bzw. Werkstoffe verwendet werden, so daß zwischen der Beschichtung 25 und der bzw. den druck- bzw. kraftaufnehmenden Lage bzw. Lagen 13 quasi eine Funktionsteilung, d.h. einerseits drucktragenden bzw. druckaufnehmenden und andererseits korrosionsbeständigen und/oder chemisch mit dem Medium 19 verträglichen Teilen, auf einfache Weise möglich ist.

### Bezugszeichenliste

- 10: Einrichtung (Kompensator)
- 11: Trägerelement
- 12: Balgkörper
- 13: Lage (erste)
- 130: Innenseite
- 131: Außenseite
- 14: Öffnung
- 15: Öffnung
- 16: Anschlußelement
- 17: Anschlußelement
- 18: Innenraum
- 19: Medium
- 20: Radialrichtung
- 21: Axialrichtung
- 22: Formelement
- 23: Bördelverbindung
- 24: Herstellungsvorrichtung
- 25: Beschichtung

## Patentansprüche

1. Einrichtung (Kompensator) zum Ausgleich der Bewegung zweier miteinander druckdicht zu verbindender Rohre, umfassend einen rohrförmig und wenigstens einlagig ausgebildeten Balgkörper, durch den ein durch die Rohre gefördertes Medium hindurchfließt und der an seinen beiden Öffnungsseiten mit einem Element zum Anschluß an das jeweilige Rohr versehen ist, dadurch gekennzeichnet, daß die den Balgkörper (12) bildende Lage (13) wenigstens an der in den Innenraum (18) gerichteten und vom Medium (19) beaufschlagten Seite (130) mit einer Beschichtung (25) versehen ist.

2. Einrichtung nach Anspruch 1, dadurch gekennzeichnet, daß die Beschichtung (25) eine metallische Beschichtung ist.

3. Einrichtung nach Anspruch 2, dadurch gekennzeichnet, daß das Metall Chrom ist.

4. Einrichtung nach Anspruch 2, dadurch gekennzeichnet, daß das Metall Nickel ist.

5. Einrichtung nach Anspruch 1, dadurch gekennzeichnet, daß die Beschichtung (25) eine Kunststoffbeschichtung ist.

6. Einrichtung nach Anspruch 5, dadurch gekennzeichnet, daß der Kunststoff Polytetrafluorethylen PTFE ist.

7. Verfahren zur Herstellung einer Einrichtung (Kompensator) zum Ausgleich der Bewegung zweier miteinander druckdicht zu verbindender Rohre, umfassend einen rohrförmig und wenigstens einlagig ausgebildeten Balgkörper, durch den ein durch die Rohre gefördertes Medium hindurchfließt und der an seinen beiden Öffnungsseiten mit einem Element zum Anschluß an das jeweilige Rohr versehen ist, dadurch gekennzeichnet, daß zunächst auf einem den späteren Balgkörper bildenden Trägerelement eine Beschichtung aufgebracht wird, wobei nachfolgend das mit der Beschichtung versehene Trägerelement zum Balgkörper verformt wird.

8. Verfahren nach Anspruch 7, dadurch gekennzeichnet, daß das Trägerelement in Form eines Rohres ausgebildet ist, bevor es nachfolgend beschichtet wird.

9. Verfahren nach einem oder beiden der Ansprüche 7 oder 8, dadurch gekennzeichnet, daß die Verformung zur Ausformung eines faltenbalgartigen Balgkörpers erfolgt.

10. Verfahren nach einem oder mehreren der Ansprüche 7 bis 9, dadurch gekennzeichnet, daß die Verformungsenergie mittels Druck in das beschichtete und rohrförmig ausgebildete Trägerelement von dessen Innenraum aus eingeleitet wird.

11. Verfahren nach Anspruch 10, dadurch gekennzeichnet, daß der Druck ein hydraulischer Druck ist.

12. Verfahren nach Anspruch 10, dadurch gekennzeichnet, daß der Druck ein pneumatischer Druck ist.

13. Verfahren nach einem oder mehreren der Ansprüche 7 bis 12, dadurch gekennzeichnet, daß die Verformungsenergie mittels Druck in das beschichtete und rohrförmig ausgebildete Trägerelement von außen in dieses eingeleitet wird.

14. Verfahren nach Anspruch 13, dadurch gekennzeichnet, daß der Druck ein mechanischer Druck ist.

15. Verfahren nach einem oder beiden der Ansprüche 13 oder 14, dadurch gekennzeichnet, daß der Druck in Radialrichtung und/oder Axialrichtung von ringförmig ausgebildeten Formelementen ausgeübt wird.

16. Verfahren nach Anspruch 15, dadurch gekennzeichnet, daß der Druck in Axialrichtung durch axiale Verschiebung der ringförmig ausgebildeten Formelemente in das Trägerelement eingeleitet wird.

17. Verfahren nach einem oder mehreren der Ansprüche 7 bis 16, dadurch gekennzeichnet, daß der Balgkörper nach seiner bestimmungsgemäßen Ausformung mittels einer Bördelverbindung mit wenigstens einem Anschlußelement verbunden wird.

18. Verfahren nach einem oder mehreren der Ansprüche 7 bis 17, dadurch gekennzeichnet, daß die Beschichtung als Dichtelement im Bereich zwischen Balgkörper und Anschlußelement wirkt.

19. Verfahren nach einem oder mehreren der Ansprüche 7 bis 18, dadurch gekennzeichnet, daß die Beschichtung mittels eines chemischen Verfahrens aufgebracht wird.

20. Verfahren nach einem oder mehreren der Ansprüche 7 bis 18, dadurch gekennzeichnet, daß die Beschichtung mittels eines elektrolytischen Verfahrens aufgebracht wird.

21. Verfahren nach einem oder mehreren der Ansprüche 7 bis 18, dadurch gekennzeichnet, daß die Beschichtung mittels eines Spritz-/Schweißverfahrens aufgebracht wird.
